# EUROPEAN PATENT SPECIFICATION

(11) **EP 0 886 082 B1**
(45) Date of publication and mention of the grant of the patent: **09.07.2003**
(21) Application number: 98201603.2
(22) Date of filing: 14.05.1998
(51) Int. Cl.: F16G 13/06

(54) **Mechanical chain**
Mechanische Kette
Chaîne mécanique

(30) Priority: 16.06.1997 IT MI971412
(43) Date of publication of application: 23.12.1998
(73) Proprietor: Fabbrica Catene a Rullo Fratelli Fossati S.p.A., 20050 Macherio, (Milano) (IT)
(72) Inventor: Fossati, Enrico, 20122 Milano (IT); Paoletti, Piero, 20048 Carate Brianza, (Milano) (IT)
(74) Representative: De Gregori, Antonella

(56) References cited:
- EP-A- 0 573 068
- DE-C- 634 803
- US-A- 2 389 874
- US-A- 3 480 338
- US-A- 3 731 551
- US-A- 3 838 896

## Description

The present invention refers to an improved mechanical chain as defined in claim 1.

As is known, wear is a very important problem of the chains, in particular for the chains which operate in particularly unfavourable conditions as, for instance, the case wherein the chains come in contact with the granules of abrasive powdered substances whereby said granules come in contact with the moving parts and greatly accelerate the wear process.

A purpose of the present invention is to provide an improved chain in order to limit, as much as possible, the wear process and to reduce the related disadvantages. Said purpose is achieved by a chain as claimed in claim 1.

Chains which employ annular seals to protect joints between chain pins and chain bushings are known for example from US 3,731,551, and from EP 0 573 068.

US 3,731,551 discloses a track for a crawler vehicle comprising adjacent track assemblies connected together by bushings and pins free to rotate with respect to each other and provided with a lubricating system with a seal positioned between the outside and the inside links of the assemblies.

EP 0 573 068 discloses a chain including a plurality of bushing and pin joints and a roller rotatably mounted on each bushing.

Each of the chain link assemblies also comprises a roller joint sealing arrangement, including a sealing member at each end of the roller.

A significant reduction in the chain wear has been noticed by putting at least some first seal means (formed by at least one annular element) between the inner and the outer plates.

The invention is described as a non limiting example in the attached drawings, in which:
Figure 1 is a partial sectional view of a first embodiment of a chain.
Figure 2 is a sectional schematic view of the seal means.
Figure 3 is a partial sectional view of a second embodiment of a chain.
Figure 4 is partial sectional view of a third embodiment of a chain.
Figure 5 is partial sectional view of a fourth embodiment of a chain.
Figure 6 is partial sectional view of a fifth embodiment of a chain.
Figure 7 is partial sectional view of a sixth embodiment of a chain.

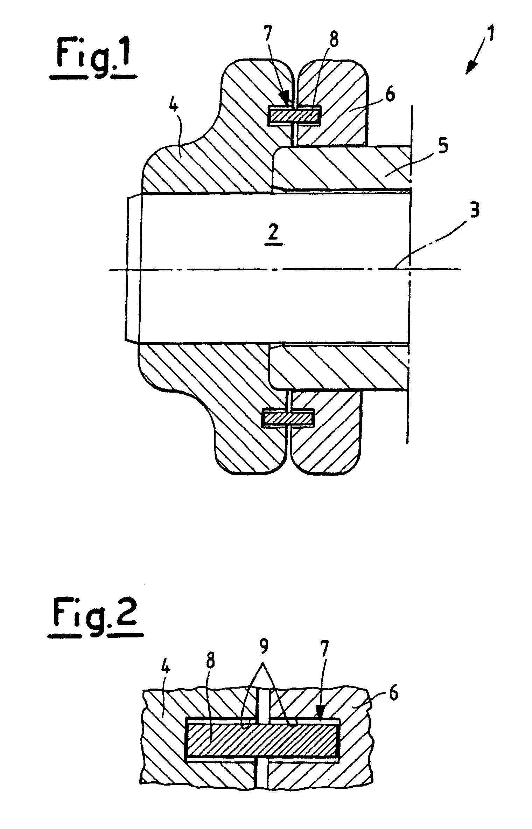

Referring to the above figures and in particular to Figure 1, the improved mechanical chain of the example is of the type comprising a plurality of pins 2 which have a common axis 3 and are one another parallel, said pins have the two ends keyed on the outer plates 4 which are one another parallel, and a plurality of bushes 5 which are one another parallel, said bushes having the two ends keyed on the inner plates 6 which are one another parallel. The bushes 5 house coaxially said pins 2 which can have a clearance with said bushes. According to the improved embodiment, the chain 1 comprises at least some first seal means 7 formed by at least one first annular element 8 for each pin 2. The first annular element 8 is placed between said inner plates 6 and said outer plates 4 and said annular element is coaxial with the axis 3 of the pin 2. As better shown in Figure 2, the first annular element 8 has, preferably, a rectangular section as does the cavity 9 wherein said element is housed. The cavity 9 is partially obtained both in the outer plate 4 and in the inner plate 6. A clearance is provided between the larger surfaces of the first annular element 8 and of the cavity 9 while a contact is provided between the other smaller surfaces. The first annular element 8 can be made of metallic, elastomeric, plastic material or else. The material of the annular element can be the same as the one used for realisation of lip seals.

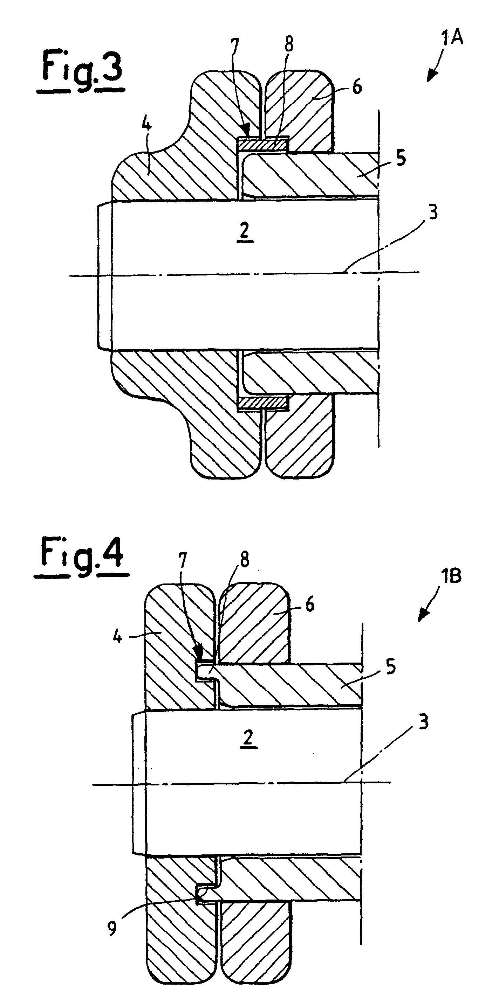

Referring in particular to Figure 3, the second embodiment of the chain generically indicated by 1A, is substantially different from the first embodiment since the annular element 8 is mounted on bush 5 which has a clearance with said annular element.

Referring in particular to Figure 4, the third embodiment of the chain generically indicated by 1B, is substantially different from the first embodiment since the first annular element 8 is integral with the bush 5 and has the outer diameter equal to the outer diameter of the bush 5 wherefrom said first annular element projects and engages a portion of the annular cavity 9 obtained in the outer plate 4. In this case the first annular element 8 is made of the same material of the bush 5.

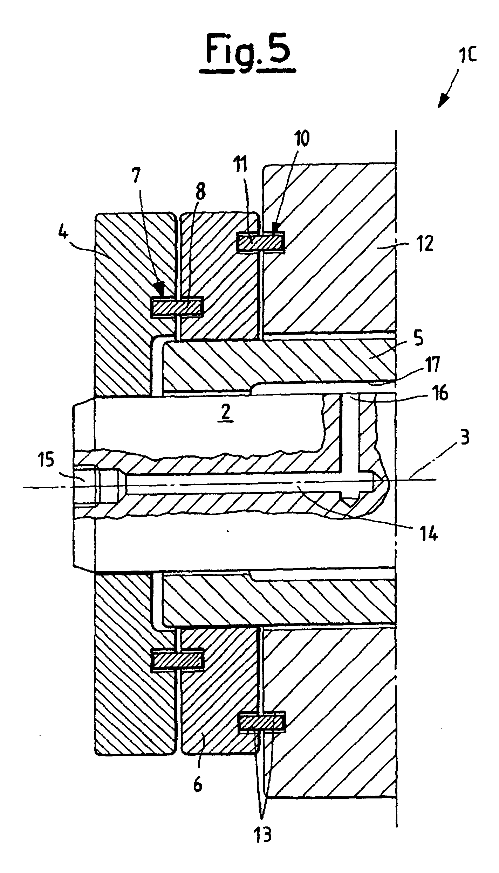

According to following further embodiments: in the fourth, fifth and sixth embodiment (shown in Figures 5-7), the chain according to the invention comprises also second seal means, indicated by numeral 10, since said chains are provided with idle rollers 12 coaxially mounted on the bushes 5. The second seal means 10 comprise at least a second annular element 11 for each pin 2. Each second annular element 11 is placed between the inner plates 6 and the rollers 12 idly mounted on the corresponding bushes 5.

Referring in particular to Figure 5, the fourth embodiment of the chain, generically indicated by 1C, provides said second annular element 11 housed in a corresponding annular cavity 13 having a first portion obtained in the inner plate 6 and a second portion obtained in the roller 12 and having an inner diameter larger than the one of the bush 5.

The considerations expressed for the manufacturing details of the first seal means 7 can be extended to the second seal means 10 with reference to Figure 2.

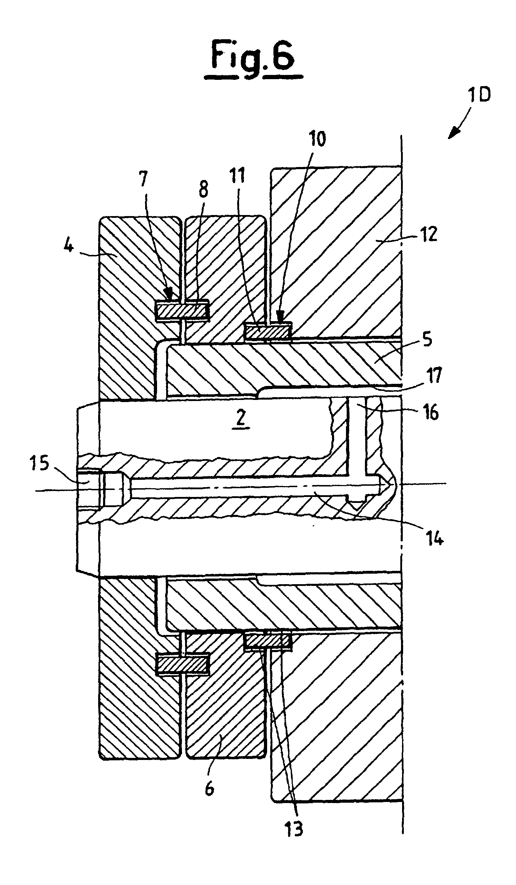

Referring in particular to Figure 6, the fifth embodiment of the chain, generically indicated with 1D, is essentially different from the fourth embodiment since said second annular element 11 is mounted on the bush 5 with clearance.

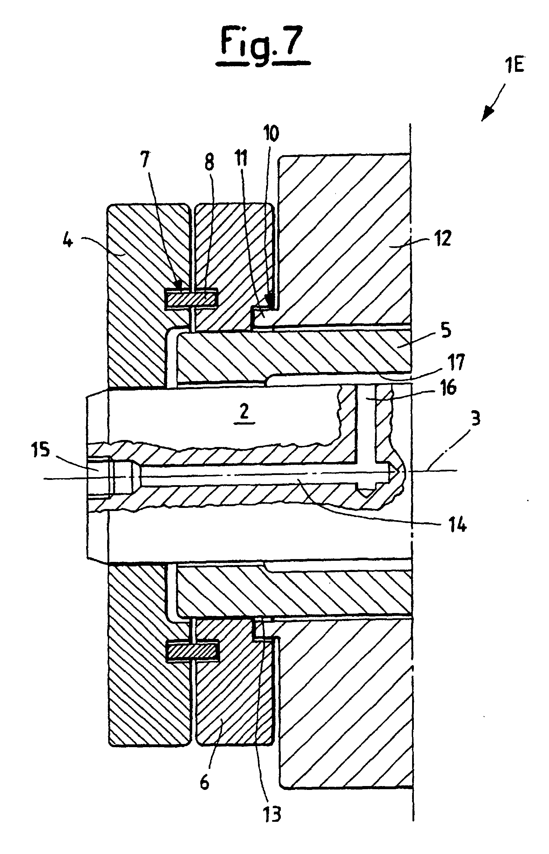

Referring in particular to Figure 7, the sixth embodiment of the chain, generically indicated with 1E, is essentially different from the fourth embodiment since said second annular element 11 is integral with roller 12 and has the inner diameter equal to the inner diameter of the roller 12 wherefrom said second annular element projects and engages a portion of the second annular cavity 13 obtained in the inner plate 6. In this case the second annular element 11 is made of the same material of the roller 12.

In order to improve the lifetime of the chain 1-1E, the invention provided a duct 14 to carry the lubricant, said duct is obtained in the pin 2 and has a first opening 15 which can be closed at one end of the pin 2 and a second opening 16 facing the inner surface 17 of the bush 5.

## Claims

1. A mechanical chain (1-1E) comprising a plurality of pins (2) which are one another parallel, each said pin having its two ends fixed on outer plates (4) which are one another parallel, and a plurality of bushes (5) which are one another parallel, each said bush having its two ends fixed on inner plates (6) which are one another parallel wherein each said bush (5) coaxially houses said pin (2) which can have a clearance with said bush, said mechanical chain comprising at least first seal means (7) formed by at least one first annular element (8) for each pin (2), and said annular element being coaxial with said pin, wherein said first annular element (8) is housed in a first annular cavity (9) obtained in the outer plate (4),
**characterised in that** said ends of said pins (2) and said bushes (5) are keyed on said outer and inner plates respectively and **in that** each one of said first annular elements (8) is integral with the bush (5) and has its outer diameter equal to the outer diameter of the bush (5) wherefrom said annular element projects and engages said first cavity (9) and **in that** said mechanical chain also comprises second seal means (10) formed by at least a second annular element (11) for each pin (2) wherein each said second annular element (11) is placed between the inner plates (6) and a roller (12) idly mounted on the bush (5).

2. A mechanical chain as claimed in claim 1, **characterised in that** each one of said first annular elements (8) has preferably a rectangular section as does the first cavity (9) which houses said annular element.

3. A mechanical chain as claimed in claim 2, **characterised in that** a clearance is provided between the larger surfaces of the first annular element (8) and of the first cavity (9) while a contact is provided between the other smaller surfaces.

4. A mechanical chain as claimed in claim 1, **characterised in that** each one of said first annular elements (8) is mounted on the bush (5) and has a clearance with said bush.

5. A mechanical chain as claimed in claim 1, **characterised in that** each one of said second annular elements (11) is housed in a corresponding second annular cavity (13) which has a first portion obtained in the inner plate (6) and a second portion obtained in the roller (12) and has an inner diameter larger than the diameter of the bush (5).

6. A mechanical chain as claimed in claim 1, **characterised in that** each one of said second annular elements (11) is mounted on the bush (5) and has a clearance with said bush.

7. A mechanical chain as claimed in claim 1, **characterised by** comprising a duct (14) to carry the lubricant, said duct is obtained in the pin (2) and has a first opening (15) which can be closed at one end of the pin (2) and a second opening (16) facing the inner surface (17) of the bush (5).

## Patentansprüche

1. Mechanische Kette (1-1E), umfassend eine Mehrzahl von Bolzen (2), die zueinander parallel sind, wobei die beiden Enden jedes Bolzens an äußeren Platten (4) fixiert sind, die zueinander parallel sind, und eins Mehrzahl von Buchsen (5), die zueinander parallel sind, wobel die beiden Enden jeder Buchse an inneren Platten (6) fixiert sind, die zueinander parallel sind, wobei Jede Buchse (5) den Bolzen (2), der einen Abstand zu der Buchse aufweisen kann, koaxial aufnimmt, wobei die mechanische Kette mindestens erste Dichtungsmittel (7), die aus mindestens einem ersten ringförmigen Element (8) gebildet sind, für jeden Bolzen (2) umfaßt und das ringförmige Element koaxial zu dem Bolzen ist, wobel das erste ringförmige Element (8) in einem ersten ringförmigen Hohlraum (9), welcher in der äußeren Platte (4) enthalten ist, aufgenommen ist,
**dadurch gekennzeichnet, daß** die Enden der Bolzen (2) und der Buchsen (5) an den äußeren bzw. inneren Platten befestigt sind und daß jedes der ersten ringförmigen Elemente (8) mit der Buchse (5) ein Ganzes bildet und sein äußerer Durchmesser gleich dem äußeren Durchmesser der Buchse (5) ist, von welcher das ringförmige Element vorsteht und in den ersten Hohlraum (9) eingreift, und daß die mechanische Kette außerdem zweite Dichtungsmittel (10), die aus mindestens einem zweiten ringförmigen Element (11) gebildet sind, für jeden Bolzen (2) umfaßt, wobel jedes der zweiten ringförmigen Elemente (11) zwischen den inneren Platten (6) und einer Rolle (12), welche lose an der Buchse (5) montiert ist, angeordnet ist.

2. Mechanische Kette nach Anspruch 1, **dadurch gekennzeichnet, daß** jedes der ersten ringförmigen Elemente (8) vorzugsweise einen rechteckförmigen Querschnitt aufweist wie der erste Hohlraum (9), welcher das ringförmige Element aufnimmt.

3. Mechanische Kette nach Anspruch 2, **dadurch gekennzeichnet, daß** ein Abstand vorgesehen ist zwischen den größeren Oberflächen des ersten ringförmigen Elements (8) und des ersten Hohlraums (9), während ein Kontakt vorgesehen ist zwischen den anderen kleineren Oberflächen.

4. Mechanische Kette nach Anspruch 1, **dadurch gekennzeichnet, daß** jedes der ersten ringförmigen Elemente (8) an der Buchse (5) montiert ist und einen Abstand zu der Buchse aufweist.

5. Mechanische Kette nach Anspruch 1, **dadurch gekennzeichnet, daß** jedes der zweiten ringförmigen Elemente (11) in einem entsprechenden zweiten ringförmigen Hohlraum (13) aufgenommen ist, der einen ersten Bereich, welcher in der Inneren Platte (6) enthalten ist, und einen zweiten Bereich, welcher in der Rolle (12) enthalten ist, aufweist und einen inneren Durchmesser hat, der größer ist als der Durchmesser der Buchse (5).

6. Mechanische Kette nach Anspruch 1, **dadurch gekennzeichnet, daß** jedes der zweiten ringförmigen Elemente (11) an der Buchse (5) montiert ist und eine Abstand zu der Buchse aufweist.

7. Mechanische Kette nach Anspruch 1, **gekennzeichnet durch** einen Kanal (14) zum Befördern des Schmiermittels, wobel der Kanal in dem Bolzen (2) enthalten ist und eine erste Öffnung (15), die an einem Ende des Bolzens (2) geschlossen werden kann, und eine zweite Öffnung (16), welche gegenüber der inneren Oberfläche (17) der Buchse (5) angeordnet ist, aufweist.

## Revendications

1. Chaîne mécanique (1-1E) comprenant une pluralité d'axes (2) qui sont parallèles les uns par rapport aux autres, chacun desdits axes ayant ses deux extrémités fixées sur des plaques externes (4) qui sont parallèles les unes par rapport aux autres, et une pluralité de douilles (5) qui sont parallèles les unes par rapport aux autres, chacune desdites douilles ayant ses deux extrémités fixées sur des plaques internes (6) qui sont parallèles les unes par rapport aux autres, dans laquelle chacune desdites douilles (5) loge coaxialement ledit axe (2) qui peut avoir un jeu avec ladite douille, ladite chaîne mécanique comprenant au moins un premier moyen d'étanchéité (7) formé par au moins un premier élément annulaire (8) pour chaque axe (2), et ledit élément annulaire étant coaxial avec ledit axe, dans laquelle ledit premier élément annulaire (8) est logé dans une première cavité annulaire (9) obtenue dans la plaque externe (4),
**caractérisée en ce que** lesdites extrémités desdits axes (2) et desdites douilles (5) sont clavetées, respectivement, sur lesdites plaques externes et internes et **en ce que** chacun desdits premiers éléments annulaires (8) forme une seule pièce avec la douille (5) et a son diamètre externe égal au diamètre externe de la douille (5) à partir duquel ledit élément annulaire se projette et s'engage dans ladite première cavité (9), et **en ce que** ladite chaîne mécanique comprend également un deuxième moyen d'étanchéité (10) formé par au moins un deuxième élément annulaire (11) pour chaque axe (2) dans lequel chacun desdits deuxièmes éléments annulaires (11) est placé entre les plaques internes (6) et un cylindre (12) monté fou sur la douille (5).

2. Chaîne mécanique selon la revendication 1, **caractérisée en ce que** chacun desdits premiers éléments annulaires (8) possède de préférence une coupe rectangulaire tout comme la première cavité (9) qui loge ledit élément annulaire.

3. Chaîne mécanique selon la revendication 2, **caractérisée en ce qu'**un jeu est prévu entre les surfaces plus grandes dudit premier élément annulaire (8) et de la première cavité (9) alors qu'un contact est prévu entre les autres surfaces plus petites.

4. Chaîne mécanique selon la revendication 1, **caractérisée en ce que** chacun des premiers éléments annulaires (8) est monté sur la douille (5) et présente un jeu avec ladite douille.

5. Chaîne mécanique selon la revendication 1, **caractérisée en ce que** chacun desdits deuxièmes éléments annulaires (11) est logé dans une deuxième cavité annulaire correspondante (13) qui possède une première partie obtenue dans la plaque interne (6) et une deuxième partie obtenue dans le cylindre (12) et possède un diamètre interne supérieur au diamètre de la douille (5).

6. Chaîne mécanique selon la revendication 1, **caractérisée en ce que** chacun desdits deuxièmes éléments annulaires (11) est monté sur la douille (5) et présente un jeu avec ladite douille.

7. Chaîne mécanique selon la revendication 1, **caractérisée en ce qu'**elle comprend un canal (14) pour amener le lubrifiant, ledit canal est prévu dans l'axe (2) et présente une première ouverture (15) qui peut être fermée à une extrémité de l'axe (2) et une deuxième ouverture (16) en vis-à-vis avec la surface interne (17) de la douille (5).
